# EUROPEAN PATENT SPECIFICATION

(11) **EP 2 640 012 B1**
(45) Date of publication and mention of the grant of the patent: **05.07.2017**
(21) Application number: 11840296.5
(22) Date of filing: 18.05.2011
(51) Int. Cl.: H04L 12/437, H04L 12/24, H04L 12/703, H04L 12/46, H04L 12/40, H04L 12/26, H04L 12/42

(54) **MULTI-RING ETHERNET NETWORK AND PROTECTION METHOD THEREOF**
MEHRRING-ETHERNET-NETZWERK UND SCHUTZVERFAHREN DAFÜR
RÉSEAU ETHERNET À ANNEAUX MULTIPLES ET PROCÉDÉ DE PROTECTION CORRESPONDANT

(30) Priority: 09.11.2010 CN 201010538404
(43) Date of publication of application: 18.09.2013
(73) Proprietor: ZTE Corporation, Shenzhen, Guangdong 518057 (CN)
(72) Inventor: ZHOU, Ji, Shenzhen Guangdong 518057 (CN)
(74) Representative: Conti, Marco
(86) International application number: PCT/CN2011/074279
(87) International publication number: WO 2012/062097

(56) References cited:
- CN-A- 1 747 439
- CN-A- 1 960 310
- CN-A- 101 075 935
- CN-A- 101 986 615
- "Ethernet ring protection switching; G.8032/Y.1344 (03/10)", ITU-T STANDARD, INTERNATIONAL TELECOMMUNICATION UNION, GENEVA ; CH, no. G.8032/Y.1344 (03/10), 9 March 2010 (2010-03-09), pages 1-98, XP017563851, [retrieved on 2010-08-27]
- SHAH M YIP EXTREME NETWORKS S: "Extreme Networks' Ethernet Automatic Protection Switching (EAPS) Version 1", 20031001; 20031000, 1 October 2003 (2003-10-01), XP015009401,
- MOY ASCEND COMMUNICATIONS J ET AL: "OSPF Version 2; rfc2328.txt", 19980401, 1 April 1998 (1998-04-01), XP015008112, ISSN: 0000-0003

## Description

### Technical Field

The present invention relates to the field of data communication, in particular to a multi-ring Ethernet protection method and a multi-ring Ethernet.

### Background

With the rapid development of Ethernet technology, the application of Ethernet becomes wider and wider, and the protection switching function of Ethernet becomes extremely important. Sine conventional Spanning Tree Protocol (STP) technology of the ring protection cannot meet the requirement of rapid convergence during link switching, Request for Comments (RFC) 3619 defines an Ethernet Automatic Protection Switching (EAPS) method, through which convergence time can be controlled within 50ms.

The EAPS technology has been realized by many device manufacturers, and many private technologies have been derived too; however, all of them have some defects.

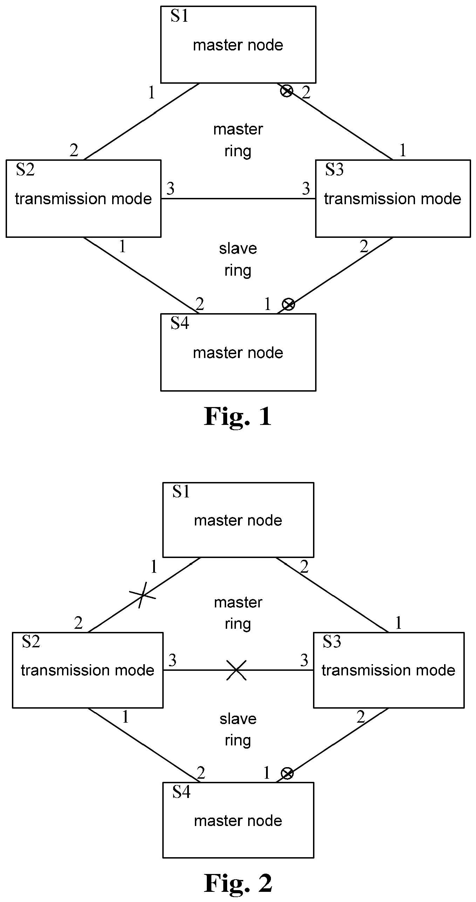

ZTE Ethernet Smart Ring (ZESR) is the enhanced improvement and supplement over the EAPS, which inherits the advantage of rapid convergence of EAPS layer-2 network and meanwhile realizes the networking capability in a complex ring network environment. In order to prevent a link shared by master and slave rings from impacting simultaneously the calculation of the master and slave rings, in the ZESR the calculation of the slave ring is performed based on a hypothesis that higher-layer ring is connected permanently, that is to say, that the shared link of the master and slave rings belongs to the master ring only, and the slave ring does no need to maintain the shared link. As shown in Fig. 1, the link between the Port 3 of S2 and the Port 3 of S3 belongs to the master ring, the master node of the ZESR master ring is S1, and the master node of the slave ring is S4. Normally, the master ring blocks the Port 2 of S1, the slave ring blocks the Port 1 of S4, communication can be performed among S1, S2, S3 and S4, and no service loop would appear. However, this hypothesis has a defect, that is, when the master ring is no longer connected, the slave ring would not open the blocked logical port, consequently, a node in the slave ring and a node in the master ring are connected in physical link but logically disconnected for the service traffic, thus, service traffic is not connected among them. As shown in Fig. 2, when the link between the Port 1 of S1 and the Port 2 of S2 has a failure and the link between the Port 3 of S2 and the Port 3 of S3 has a failure too, the Port 2 of S1 in the master ring is no longer blocked; however, the Port1 of S4 in the slave ring still keeps blocked, in this way, S1, S3 and S2, S4 becomes two independent logic areas, between which traffic is not connected.

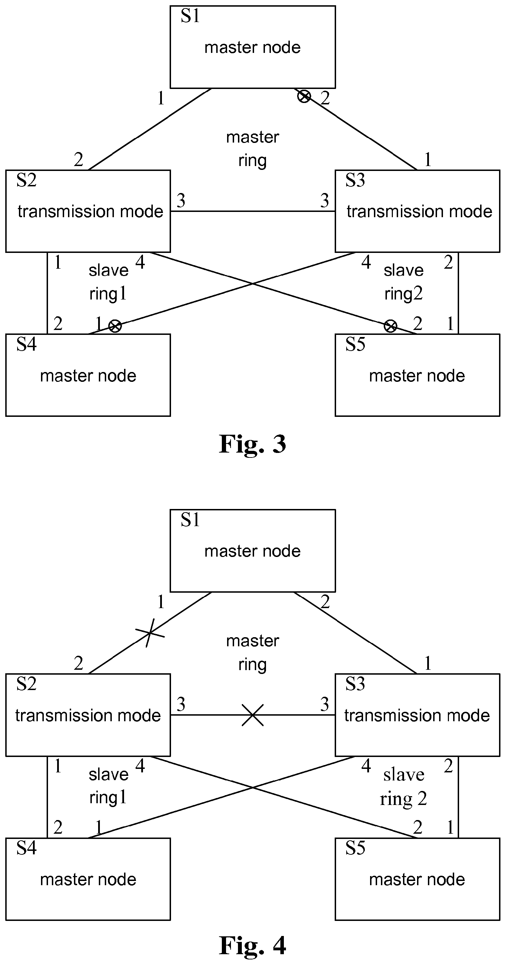

However, Rapid Ring Protection Protocol (RRPP) of the ring protection technology considers the above problem; in this technology, the slave ring sends a detection message periodically; when the master ring is no longer connected, the slave ring would open the blocked port in the slave ring due to the timeout of the detection message. Besides, the RRPP also considers the condition of dual-home link, as shown in Fig. 3, a slave ring 1 blocks the Port 1 of S4 and a slave ring 2 blocks the Port 2 of S5. If the master ring is disconnected, the blocked ports of the slave ring 1 and the slave ring 2 are opened simultaneously; then, net storm is formed between the two slave rings. Therefore, as shown in Fig. 4, the RRPP would block an edge port of an edge node in the slave ring before opening the slave port of the master node in the slave ring, so as to avoid data loop between multiple slave rings. However, this method cannot essentially solve the problem that the physical link between a node in the master ring and a node in the slave ring is connected but the link between the two nodes is logically disconnected for the service traffic when the master ring itself is disconnected. Because, according to the implementation of the RRPP, when the master ring link is disconnected, the slave ring still has one port blocked; as shown in Fig. 2, when the link between S1 and S2 and the link between S2 and S3 have a failure, the RRPP would open the Port 1 of S4 and blocks the Port 1 of S2; although S1 and S4 can perform normal communication at this moment, S2 becomes an isolated node, and the communication between S2 and any one of S1, S3, and S4 would be interrupted. Further, if the slave port of the master ring becomes physically down from logic blocked, and the shared link of the master and slave rings is disconnected too, the Port 1 of S2 still is blocked in Fig. 1 according to the method of RRPP; in this way, S1 and S4 cannot communicate with each other. Therefore, the RRPP cannot well resolve the problem of disconnection of master ring in these abnormal conditions.

To sum up, in the above conventional art each area knows the link state of its own ring but does not know the link state of other rings, thus, the slave ring has no response when the link of the master ring itself is disconnected and consequently the link, which is physically connected between a node in the master ring and a node in the slave ring, is logically disconnect for the service traffic, therefore, the problem, that the physical link between a node in the master ring and a node in the slave ring is connected but the link between the two nodes is logically disconnected for the service traffic when the master ring itself is no longer connected, cannot be well solved.

Ethernet ring protection switching; G.8032/Y1344(03/10),ITU-T STANDARD, INTERNATIONAL TELECOMMUNICATION UNION, GENEVA; CH, no, G.8032/Y.1344(03/10), 9 March 2010(2010-03-09),pages 1-98, provides respective technical solutions; however, the above mentioned problem still remains unsolved.

### Summary

The present invention solves the above-mentioned problem by a multi-ring Ethernet protection method according to claim 1, and a multi-ring Ethernet system according to claim 7.

### Brief Description of the Drawings

Drawings, provided for further understanding of the present invention and forming a part of the specification, are used to explain the present invention together with embodiments of the present invention rather than to limit the present invention, wherein:
Fig. 1 shows a topology of a master ring-slave ring link with no failure according to relevant art;
Fig. 2 shows a topology of a master ring-slave ring link in which the master ring has a failure according to relevant art;
Fig. 3 shows a topology of a dual-home link with no failure according to relevant art;
Fig. 4 shows a topology of a dual-home link in which the master ring has a failure and the slave ring opens blocked ports according to relevant art;
Fig. 5 shows a flowchart of a multi-ring Ethernet protection method according to an embodiment of the present invention;
Fig. 6 shows an application topology of a multi-ring Ethernet protection method according to the first preferred embodiment of the present invention;
Fig. 7 shows an application topology of a multi-ring Ethernet protection method according to the second preferred embodiment of the present invention;
Fig. 8 shows an application topology of a multi-ring Ethernet protection method according to the third preferred embodiment of the present invention; and
Fig. 9 shows a structure diagram of a multi-ring Ethernet according to an embodiment of the present invention.

### Detailed Description of Embodiments

The embodiments are described in conjunction with the drawings as follows. The embodiments of the present application and the features of the embodiments can be combined with each other if there is no conflict.

First, a brief introduction is provided for some terminologies referred in the following embodiments of the present invention. When multiples rings are intersected, one ring is called a master ring and other rings intersected the master ring are called slave rings; the node where the master ring and the slave ring are intersected are called a boundary node; the link shared by the master ring and the slave ring is called a shared link. The port on the boundary node connected with the master node of the slave ring is called an edge port.

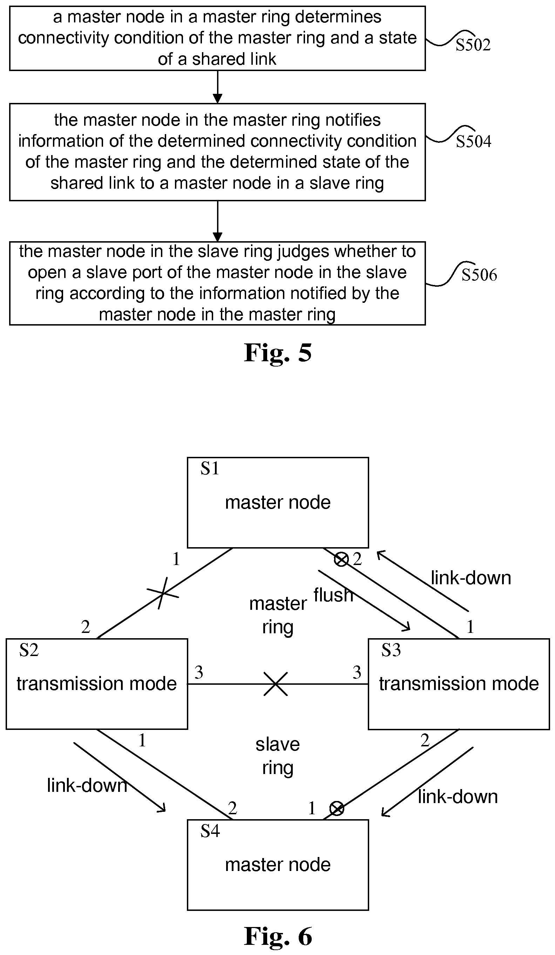

Fig. 5 shows a flowchart of a multi-ring Ethernet protection method according to an embodiment of the present invention, and the method includes the following steps.

Step 502, a master node in a master ring determines connectivity condition of the master ring and a state of a shared link.

For example, the master node may detect states of links in the master ring to determine whether the master ring is connected, when the shared link has a failure.

Step 504, the master node in the master ring notifies information of the determined connectivity condition of the master ring and the determined state of the shared link to a master node in a slave ring.

Step 506, the master node in the slave ring judges whether to open a slave port of the master node in the slave ring according to the information notified by the master node in the master ring.

In this embodiment, the master node in the master ring may collect state information of the links in the master ring and notifies the information to the master node in the slave ring, and then the master node in the slave ring determines whether to block the slave port or open the slave port according to the notification information, thereby enabling the master node in the slave ring to open the blocked port conditionally to ensure that the physical link between a node in the master ring and a node in the slave ring is connected and the link between the two nodes is logically connected for the service traffic, and well resolving the problem that the link, which is physically connected between a node in the master ring and a node in the slave ring, is logically disconnected for the service traffic when the master ring itself is no longer connected.

In actual implementation, in order to enable the master node in the master ring to accurately determine the connectivity condition of the master ring and the state of the shared link, an embodiment of the present invention utilizes some reserved fields in an EAPS frame of RFC3619. One EAPS frame totally has reserved words which are 36 bytes; then, a plurality of identification fields with a format of MAC address + PORTID (port ID) can be filled in a message of EAPS protocol, wherein the identification fields are used to indicate the shared link with failure (or link-down); each of the identification fields also identifies a boundary node having a failure in the link, and uniquely identify a slave ring. If the MAC address occupies 6 bytes and the PORTID occupies 2 bytes, then, 4 identification fields may be filled in the message at most. In addition, a counter is needed to maintain the number of the filled identification fields, and this counter occupies 1 byte. In this way, Step 502 might include the following steps to determine the connectivity condition of the master ring and the state of the shared link.

Step 1, after detecting the link-down of the shared link, a first boundary node (any one boundary node) sends a link-down protocol message containing no identification field to the master ring and simultaneously sends a link-down protocol message containing identification field to the slave ring, wherein the link-down protocol message containing identification field carries an identification field and the number of identification fields, the carried identification field is a first identification field consisting of an MAC address of the first boundary node and an ID of a port sending out the link-down protocol message containing identification field; obviously, the number of identification fields should be 1 at this moment.

In actual application, the number of identification fields can be represented by the value of the counter added in the message.

That is, each boundary node in the EAPS ring monitors the shared link of the master ring and the slave ring; if finding that the shared link is down (failed), besides sending to the master ring a common link-down protocol message (that is, the link-down protocol message containing no identification field; in the EAPS protocol, this type of message is sent out by a transmission node when the link has a failure, with a purpose of informing the master node that the ring has a failure), the boundary node also needs to send a link-down protocol message of the master ring(that is, a link-down protocol message containing identification field) to all edge ports on the nodes in order to send the link-down protocol message to the slave ring, wherein the link-down protocol message sent to the slave ring carries an identification field; the boundary node fills the identification field consisting of its own MAC address and the ID of the edge port sending out this message into the link-down protocol message. All nodes in the slave ring pass through this message.

In the above, if the failure does not occur on the shared link, the boundary node does not send the link-down protocol message containing identification field to the slave ring, but sends the link-down protocol message containing no identification field to the master ring only.

After receiving the link-down protocol message containing no identification field, the master node in the master ring would record the source MAC and the ingress port ID of this message.

Step 2, after a second boundary node at the other end of the first boundary node receives the link-down protocol message containing identification field, the second boundary node adds a second identification field in the link-down protocol message containing identification field and sends the link-down protocol message containing identification field to the master node in master ring, wherein the second identification field includes an MAC address of the second boundary node and an ID of an ingress port of the link-down protocol message containing identification field.

That is, when the link-down protocol message containing identification field sent by the first boundary node enters the second boundary node at the other end of the first boundary node through the slave ring, this message is reported to a Central Processing Unit (CPU) to be processed; then, the second boundary node fills into this message a new identification field (that is, the second identification field), including the MAC address of the second boundary node and the ID of an edge port from which this message enters, and sets the number of identification fields as 2; and then the second boundary node sends out this message to the master ring.

Step 3, after receiving the link-down protocol message containing identification field, the master node in the master ring saves the identification fields contained in this message (that is, the first identification field and the second identification field) to a local buffer area.

In actual application, after receiving the link-down protocol message containing identification field, the master node in the master ring also records the ingress port ID and the source MAC of this message.

Step 4, the master node in the master ring judges whether the link-down protocol message containing no identification field and the link-down protocol message containing identification field are received on different ports respectively, according to the locally recorded source MAC addresses and ingress port IDs of the received link-down protocol message containing no identification field and the received link-down protocol message containing identification field.

Since the master node in the master ring would record the source MAC and ingress port ID of each received message, the master node in the master ring may determine the connectivity condition of the master ring and decide whether to send the flush protocol message containing identification field (in the EAPS, the flush protocol message is sent out by the master node when the ring changes, with a purpose of synchronizing the states of one or more transmission nodes and notifying the one or more transmission nodes to flush MAC) or the flush protocol message containing no identification field (that is, common flush protocol message), according to the ingress port, source MAC of the message and the information of the identification fields in the local buffer area. If the master node in the master ring only receives the link-down protocol message containing identification field, the master node in the master ring caches all the identification fields in the message and records the ingress port ID and source MAC address of the message, and then sends the flush protocol message containing no identification field; if the master node in the master ring also receives the link-down protocol message containing no identification field from another port, the master node in the master ring determines to send the flush protocol message containing identification field. That is, only when the link-down protocol message containing no identification field and the link-down protocol message containing identification field are received on different ports respectively, the master node in the master ring would send the flush protocol message containing identification field.

Step 5, if the link-down protocol message containing no identification field and the link-down protocol message containing identification field are received on different ports respectively, the master node in the master ring judges whether the source MAC address of the received link-down protocol message containing no identification field is matched with the MAC address in the first identification field in the local buffer area or the MAC address in the second identification field in the local buffer area.

That is, after determining to send the link-down protocol message containing identification field, the master node in the master ring also needs to extract the source MAC address of the received message containing no identification field to match the MAC address in the identification field in the local buffer area, so as to judge whether there is one or more failures in the master ring.

Step 6, if the source MAC address of the received link-down protocol message containing no identification field is matched with the MAC address in the first identification field in the local buffer area or the MAC address in the second identification field in the local buffer area, it is indicated that there is only one link failure in the master ring currently, and the master node in the master ring determines that the master ring is connected and the shared link is down; if not matched, it is indicated that there are multiple link failures in the master ring currently, and the master node in the master ring determines that the master ring is disconnected and the shared link is down.

After determining the connectivity condition of the master ring and the state of the shared link through Step 1 to Step 6 included in Step 520, the master node in the master ring needs to notify the information of the connectivity condition of the master ring and the state of the shared link to the master node in the slave ring so that the master node in the slave ring makes a decision on whether to open the slave port; in this way, Step 504 might include the followings. If the master node in the master ring determines that the master ring is disconnected and the state of the shared link is down (that is, the matched condition in Step 6 included in Step 502), the master node in the master ring sends the flush protocol message containing identification field to the master node in the slave ring (the flush protocol message containing identification field is passed to the master node in the slave ring through the boundary node), wherein the flush protocol message containing identification field carries one or more identification fields used for indicating the shared link (that is, all identification fields in the local buffer area of the master node in the master ring) and the number of identification fields; then, Step 506 includes the following. After receiving the flush protocol message containing identification field, the master node in the slave ring determines that the master ring is disconnected when judging that the flush protocol message containing identification field carries the number of identification fields, and opens the slave port. In actual application, the number of identification fields carried in the flush protocol message containing identification field may be represented by the value of the counter, namely, setting the identification field counter carried in the sent flush protocol message containing identification field as the number of identification fields in this message.

In another condition, if the master node in the master ring determines that the master ring is connected and the state of shared link is down in Step 504 (that is, the unmatched condition in Step 6 included in Step 502), the master node in the master ring sends the flush protocol message containing identification field to the master node in the slave ring (the flush protocol message containing identification field is passed to the master node in the slave ring through the boundary node; that is, after the boundary node receives the flush protocol message, if the flush protocol message carries the one or more identification fields, the boundary node passes through the flush protocol message to the slave ring), wherein the flush protocol message containing identification field carries the one or more identification fields used for indicating the shared link (that is, all identification fields in the local buffer area of the master node in the master ring) and a first predetermined value used for indicating the connection of the master ring (this predetermined value may be a regulated big value, such as 64, 127); then, in Step 506, after receiving the flush protocol message containing identification field, the master node in the slave ring determines that the master ring is connected according to the first predetermined value carried in the flush protocol message containing identification field, and keeps blocking the slave port after determining that there is no link failure in the slave ring. In actual application, the first predetermined value also may be represented by the value of the counter in the message, namely, setting the identification field counter carried in the sent flush protocol message containing identification field as a big value (that is, the first predetermined value).

That is, after receiving the flush protocol message containing identification field, the master node in the slave ring analyzes the one or more identification fields in the message so as to decide whether to block or open the slave port; if the value of the identification field counter carried in this message is a very big value (that is, the first predetermined value), it is indicated that the master ring is connected; thus, it is needed to block the slave port of the master node in the slave ring (if there is no link failure in the slave ring right now); if the value of the identification field counter in this message is not the regulated big value (but is the number of the identification fields in this message), and the MAC in the identification field carried in this message is matched with any one MAC address recorded previously, the master node in the slave ring opens the slave port.

In addition, it also may be judged whether the master ring has one link failure only, according to whether the master node in the master ring receives from the master port and the slave port the link-down protocol message sent from one same MAC address respectively.

The preferred embodiments above describe the processing method performed when the link in the master ring has a failure.

During the process of actual implementation, after the master node in the master ring sends the link-down protocol message containing identification field to the slave ring in the step 1 above, the master node in the slave ring receives the link-down protocol message containing identification field, and needs to record the identification field (that is, the first identification field mentioned above) in this message and pass through the link-down protocol message containing identification field to the second boundary node; In order to avoid the occurrence of net storm; in the following Step 506, after receiving the flush protocol message containing identification field, the master node in the slave ring judges whether the flush protocol message containing identification field carries the number of identification fields in this message (the number can be represented by the value of the counter in the message); if the flush protocol message containing identification field carries the number of identification fields in this message, the master node in the slave ring determines that the master ring is disconnected; then the master node in the slave ring needs to judge whether the MAC address in the identification field carried in the flush protocol message containing identification field is matched with the MAC address of one identification field locally recorded by the master node in the slave ring; if so, the master node in the slave ring opens the slave port. In this way, the phenomenon, that a slave port of a master node in one slave ring is opened according to the flush protocol message containing identification field in other slave rings, is avoided when multiple slave rings coexist, thus net storm is prevented.

Obviously, since both boundary nodes (that is, the first boundary node and second boundary node) on two ends of the broken shared link would send the link-down protocol message containing identification field, and would add in the message the identification field consisting of the MAC address of itself and the ingress port ID of the message after receiving the link-down protocol message containing identification field sent from each other. At this moment, the master node in the slave ring may record the identification fields (that is, the first identification field and the second identification field) of two boundary nodes.

Finally, when the shared link is recovered, the boundary nodes on two ends of the shared link would stop sending the link-down protocol message containing identification field, if the master node in the slave ring does not receive the link-down protocol message containing identification field within a predetermined time (for example, link-down timeout time), and the slave ring itself does not have a link failure, the master node in the slave ring blocks the slave port. If the shared link still has a failure but other links in the master ring are recovered, the master node in the master ring would send the flush protocol message containing identification field (the one or more identification fields carried in the message may be all identification fields in the local buffer area of the master node in the master ring), wherein the value of the identification field counter in the flush protocol message containing identification field is a regulated big value (which is called a second predetermined value, for example, 64, 127 and the like), then the boundary node passes this message to the slave ring; after receiving this message, the master node in the slave ring analyzes that the value of the identification field counter in the message is the second predetermined value and then determines that the master ring is connected; if the slave ring itself has no link failure, the master node in the slave ring blocks the slave port. The above is the processing method performed when the link in the master ring is recovered.

Hereinafter, the specific processing method in the condition that the master ring is disconnected and the shared link is down, the master ring is connected and the shared link is down, or the shared link is recovered in the embodiment of the present invention is described according to the specific network topology shown in Fig. 6 to Fig. 8.

As shown in Fig. 6, in a master ring, a link between a Port 1 of a master node S1 and a Port 2 of a boundary node S2 has a failure (down), a link (shared link) between a Port 3 of the boundary node S2 and a Port 3 of a boundary node S3 has a failure too, thus the master ring is disconnected.

After the S1 knows the link failure at the Port 1, the S1 receives a link-down protocol message containing no identification field from itself immediately; at this moment, the S1 records that a source MAC of the link-down protocol message is MAC_S1 and an ingress port ID is 1; at this moment, the S1 opens an Port 2 and sends out a flush protocol message containing no identification field; after the S3 knows the link failure at the Port 3, the S3 sends the link-down protocol message containing no identification field to the Port 1 in the master ring immediately, wherein after the link-down protocol message enters the S1 from the Port 2, the S1 records that the source MAC of this message is MAC-S3 and the ingress port ID is 2; since one or more identification fields in the buffer area are empty, then the flush protocol message sent at this moment still contains no identification field; the S3 also finds that the Port 3 is in a shared link, thus, the S3 sends the link-down protocol message containing identification field to the Port 2, wherein the MAC is MAC_S3, the port ID is 2 and the counter is 1 in the identification field filled in this message; after the S4 receives this message, on one hand, the S4 sends out this message from the Port 2 intactly, on the other hand, the S4 records the identification field to its own protocol buffer area; after the S2 receives the message, the S2 fills its own identification field into this message, but the S2 finds that all master ring links where the S2 is located have a failure, thus this message is dropped; after the S2 finds the link failure at the Port 2 and Port 3, the S2 sends the link-down protocol message containing identification field to the Port 1, wherein the MAC is MAC_S2, the port ID is 1 and the counter is 1 in the identification field filled in the message; after the S4 receives this message, the S4 sends out this message from the Port 1 and records the identification field therein to its own protocol buffer area; after the S3 receives this message, the S3 fills its own identification field into this message, wherein the MAC is MAC_S3, the port ID is 2 and the counter becomes 2 in the new identification field; then, the S3 sends out this message from the Port 1; after the S1 receives this link-down protocol message, the S1 saves the identification fields carried in the message to its own buffer area and records that the source MAC is MAC_S2 and the ingress port ID is 2; when the S1 takes the source MAC in the link-down protocol message from the Port1 to match one or more identification fields in the buffer area, the S1 finds that match fails; therefore, the S1 sends the flush protocol message containing identification field at this time, wherein the identification field counter is a correct value, which is 2 at this moment. After the S3 receives the flush protocol message containing identification field, the S3 sends this message to the slave ring from the Port 2; after the S4 receives this message, the S4 compares identification fields previously saved in the protocol buffer area with the identification fields in the flush protocol message; then, MAC match succeeds and the value of the counter is 2; therefore, the S4 opens the slaved port 1.

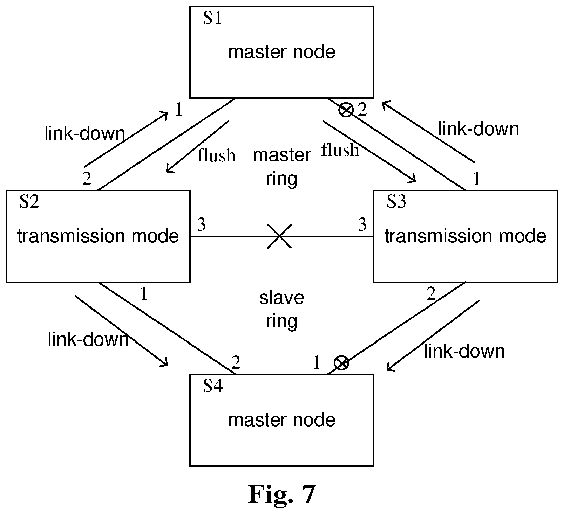

As shown in Fig. 7, only a shared link of a master ring and a slave ring has a failure, that is, a link between a Port 3 of an S2 and a Port 3 of an S3 has a failure.

The S2 sends a link-down protocol message containing no identification field to an Port 2 and the S3 sends a link-down protocol message containing no identification field to an Port 1 too; after receiving these messages, the S1 sends the flush protocol message containing no identification field for one or more identification fields in the buffer area are empty. After detecting the failure of the shared link, both S2 and S3 send to the slave ring a master ring link-down protocol message containing respective identification field; and, after receiving the link-down protocol message from each other, both S2 and S3 fill respective identification field into the message and then send the message to the master ring; finally, the S1 can receive the link-down protocol messages containing identification field of both S2 and S3 from two ports; when the S1 takes source MACs of the link-down protocol messages from different ports to match with the identification fields, the S1 finds that they can be matched successfully and then sends the flush protocol message containing identification field, wherein a value of the identification field counter in the message is a big value (for example, 64), and both S2 and S3 forward the flush protocol message to the slave ring after receiving this message; after the S4 receives this message, the S4 parses out the value of the identification field counter in the message and finds that the highest position of this byte is 1, while a state of the slave ring is UP at this moment, thus, the S4 blocks the Port 1 and would not open it.

It should be noted that if the link state transforms into the state in Fig. 7 from the state in Fig. 6, that is, the shared link is always in down state but the link between S1 and S2 becomes recovered from disconnected, the Port 1 of the S1 and the Port 2 of the S2 need at least one link-down timeout+pre-up (pre-boot or pre-recover) time before entering forwarding state; during this time, the Port 1 of the S1 and the Port 2 of the S2 are temporarily blocked and the service traffic is not connected; therefore, this time is long enough for the S4 to receive the flush protocol message of which the value of the identification field counter is 64 to block the slave port; thus, net storm would not occur.

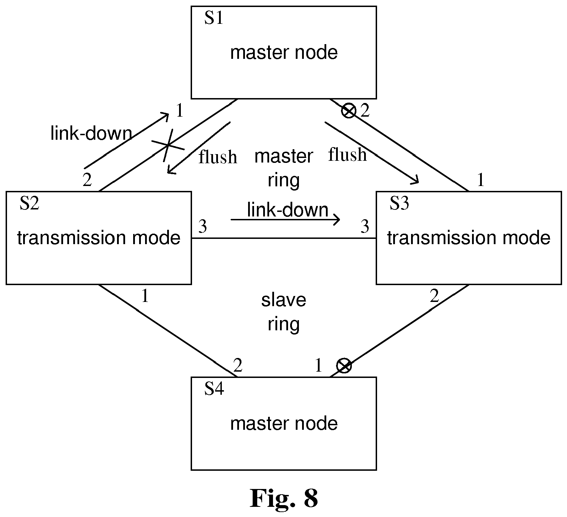

As shown in Fig. 8, only one non-shared link of a master ring has a failure, that is, a link between a Port 1 of an S1 and an Port 2 of an S2 has a failure.

At this moment, both S1 and S2 send a link-down protocol message containing no identification field in the master ring, and the S1 sends a flush protocol message containing no identification field only; therefore, these messages would not impact the slave ring.

It should be noted that if the link state transforms into the state in Fig. 8 from the state in Fig. 6, that is, the non-shared link of the master ring is always disconnected and the shared link between S2 and S3 is recovered, the Port 3 of the S2 and the Port 3 of the S3 need at least one link-down timeout+pre-up time before entering forwarding state; during this time, the Port 3 of the S2 and the Port 3 of the S3 are temporarily blocked and the service traffic is not connected. When the link is recovered, the Port 3 of the S2 and the Port 3 of the S3 stop sending all link-down protocol messages; if the master node S4 in the slave ring does not receive the link-down protocol message within a link-down timeout time, the S4 blocks the port 1; thus, net storm would not occur.

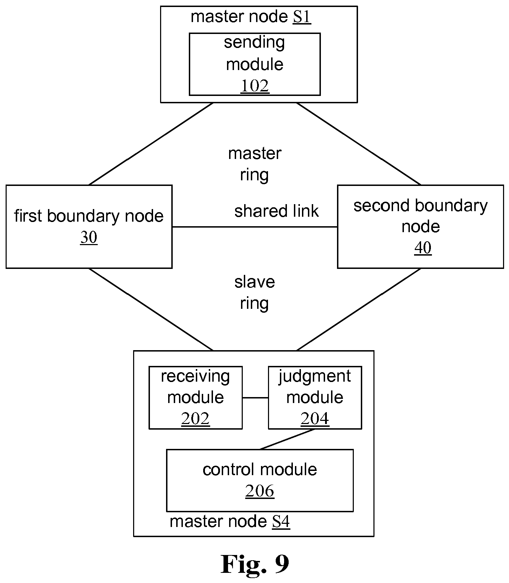

Fig. 9 shows a structure diagram of a multi-ring Ethernet according to an embodiment of the present invention, including: a master node S1 in a master ring, which is configured to determine connectivity condition of a master ring and a state of a shared link, and to notify the information of the determined connectivity condition of the master ring and the determined state of the shared link to a master node S4 in a slave ring; and the master node S4 in the slave ring, which is configured to judge whether to open a slave port according to the information.

During actual application, the master node S1 in the master ring may further include: a sending module S12, which is configured to send a flush protocol message containing identification field to the master node S4 in the slave ring, when the master node S1 in the master ring determines that the master ring is disconnected and the state of the shared link is down, wherein the flush protocol message containing identification field carries one or more identification fields used for indicating the shared link and the number of identification fields;
the master node S4 in the slave ring includes: a receiving module S42, which is configured to receive the flush protocol message containing identification field from the master node S1 in the master ring; a judgment module S44, which is configured to judge whether the flush protocol message containing identification field carries the number of identification fields, and, if so, to determine that the master ring is disconnected; a control module S46, which is configured to open the slave port of the master node S4 in the slave ring in the condition that the judgment module S44 determines that the master ring is disconnected.

In another condition, the sending module S12 of the master node S1 in the master ring is further configured to send a flush protocol message containing identification field to the master node S4 in the slave ring, when the master node S1 in the master ring determines that the master ring is connected and the state of the shared link is down, wherein the flush protocol message containing identification field carries one or more identification fields used for indicating the shared link and a first predetermined value (which may be a regulated big value, for example, 64. 127) used for indicating that the master ring is connected; and, the receiving module S42 of the master node S4 in the slave ring is further configured to receive the flush protocol message containing identification field from the master node S1 in the master ring; the judgment module S44 is further configured to judge whether the flush protocol message containing identification field carries the first predetermined value, and, if so, to determine that the master ring is connected, and to notify the control module S46 to keep blocking the slave port after determining that there is no link failure in the slave ring.

During actual application, in order to enable the master node to learn the connectivity condition of the master ring and the state of the shared link, the multi-ring Ethernet might include:
a first boundary node 30, which is configured to send a link-down protocol message containing no identification field to the master ring and simultaneously to send a link-down protocol message containing identification field to the slave ring, after detecting a link-down of the shared link, wherein the link-down protocol message containing identification field carries an identification field and the number of identification fields, the carried identification field is a first identification field consisting of an MAC address of the first boundary node and an ID of a port sending out the link-down protocol message containing identification field;
a second boundary node 40, which is located at the other end of the first boundary node 30 (the first boundary node 30 and the second boundary node 40 are connected through the shared link), and is configured to add, after receiving the link-down protocol message containing identification field from the first boundary node 30, a second identification field in the link-down protocol message containing identification field and to send the link-down protocol message containing identification field to the master ring, wherein the second identification field includes an MAC address of the second boundary node and an ID of an ingress port of the link-down protocol message containing identification field;
the master node S1 in the master ring is further configured to: save the first identification field and the second identification field to a local buffer area, after receiving the link-down protocol message containing identification field; and judge whether the link-down protocol message containing no identification field and the link-down protocol message containing identification field are received on different ports respectively, according to one or more locally recorded source MAC addresses and ingress port IDs of the received link-down protocol message containing no identification field and the received link-down protocol message containing identification field; if so, judge whether the MAC address in the first identification field or the MAC address in the second identification field in the local buffer area is matched with the one or more source MAC addresses of the received link-down protocol message containing no identification field; if so, determine that the master ring is connected and the shared link is down; otherwise, determine that the master ring is disconnected and the shared link is down.

At this moment, the one or more identification fields carried in the flush protocol message containing identification field which is sent by the sending module S12 of the master node S1 in the master ring are all identification fields in the local buffer area of the master node S1 in the master ring.

In the above, the master node S4 in the slave ring is further configured to record the first identification field after receiving the link-down protocol message containing identification field from the first boundary node 30, and to pass through the link-down protocol message containing identification field to the second boundary node 40; in this way, in order to avoid the occurrence of net storm, when judging whether to open the slave port of the master node S4, the master node S4 in the slave ring needs to judge that the received flush protocol message containing identification field carries the number of identification fields first and determines that the master ring is disconnected, and then determines that an MAC address in one identification field carried in the flush protocol message containing identification field is matched with an MAC address in one identification field recorded by the master node in the slave ring locally, and finally opens the slave port.

In the condition that the link in the master ring is recovered, the first boundary node 30 is further configured to stop sending the link-down protocol message containing identification field to the slave ring, when detecting that the shared link is recovered; then, the master node S4 in the slave ring blocks the slave port, when not receiving the link-down protocol message containing identification field within a predetermined time and when determining that there is no link failure in the slave ring.

In addition, in another link recovered condition that the shared link still is down but other links in the master ring are recovered, the sending module S12 of the master node S1 in the master ring is further configured to send the flush protocol message containing identification field to the master node S4 in the slave ring, when the master node S1 in the master ring determines that the state of the shared link still is down and other links in the master ring all are recovered, wherein the flush protocol message containing identification field carries the one or more identification fields (which may be all identification fields in the local buffer area of the master node in the master ring) used for indicating the shared link and a second predetermined value (which may be a regulated big value, for example, 64, 127) used for indicating the connection of the master ring; then, the judgment module S44 of the master node S4 in the slave ring is further configured to judge whether the flush protocol message containing identification field carries the second predetermined value after the receiving module S42 receives the flush protocol message containing identification field, and, if so, to determine that the master ring is connected, and then to notify the control module S46 to block the slave port when determining that there is no link failure in the slave ring.

From the description above, it can be seen that the present invention realizes the following technical effects: the protection and processing capability of the multi-ring Ethernet is enhanced through the improved EAPS; when the link of the master ring is no longer connected, the slave ring opens the blocked port conditionally to ensure that the link, which is physically connected between a node in the master ring and a node in the slave ring, is logically connected for the service traffic.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the present invention are all included in the scope of the protection of the present invention.

## Claims

1. A multi-ring Ethernet protection method, **characterized by** comprising:
determining, by a master node in a master ring, connectivity condition of the master ring and a state of a shared link (S502);
notifying, by the master node in the master ring, information of the determined connectivity condition of the master ring and the determined state of the shared link to a master node in a slave ring (S504); and
judging, by the master node in the slave ring, whether to open a slave port according to the information (S506);
wherein the shared link is a link shared between the master ring and the slave ring;
wherein
the steps of notifying the information of the connectivity condition of the master ring and the state of the shared link to the master node in the slave ring, and of judging whether to open the slave port according to the information comprise: the master node in the master ring sending a flush protocol message containing identification field to the master node in the slave ring, if the master node in the master ring determines that the master ring is disconnected and the state of the shared link is down, wherein the flush protocol message containing identification field carries one or more identification fields used for indicating the shared link and the number of identification fields; and the master node in the slave ring receiving the flush protocol message containing identification field, determining that the master ring is disconnected when judging that the flush protocol message containing identification field carries the number of identification fields, and opening the slave port;
or the steps of notifying the information of the determined connectivity condition of the master ring and the determined state of the shared link to the master node in the slave ring, and of judging whether to open the slave port according to the information comprise: the master node in the master ring sending a flush protocol message containing identification field to the master node in the slave ring, when determining that the master ring is connected and the state of the shared link is down, wherein the flush protocol message containing identification field carries one or more identification fields used for indicating the shared link and a first predetermined value used for indicating connectivity of the master ring; and the master node in the slave ring receiving the flush protocol message containing identification field; the master node in the slave ring determining that the master ring is connected according to the first predetermined value carried in the flush protocol message containing identification field, and keeping blocking the slave port after determining that there is no link failure in the slave ring.

2. The method according to claim 1, **characterized in that** determining, by the master node in the master ring, the connectivity condition of the master ring and the state of the shared link comprises:
after detecting a link-down of the shared link, a first boundary node sending a link-down protocol message containing no identification field to the master ring and simultaneously sending a link-down protocol message containing identification field to the slave ring, wherein the link-down protocol message containing identification field carries one or more identification fields and the number of identification fields, the carried identification field is a first identification field consisting of a Media Access Control, MAC, address of the first boundary node and an Identifier, ID, of a port sending out the link-down protocol message containing identification field;
after a second boundary node at the other end of the first boundary node receives the link-down protocol message containing identification field, the second boundary node adding a second identification field in the link-down protocol message containing identification field and sending the link-down protocol message containing identification field to the master ring, wherein the second identification field comprises an MAC address of the second boundary node and an ID of an ingress port of the link-down protocol message containing identification field;
after receiving the link-down protocol message containing identification field, the master node in the master ring saving the first identification field and the second identification field to a local buffer area;
the master node in the master ring judging whether the link-down protocol message containing no identification field and the link-down protocol message containing identification field are received on different ports respectively, according to locally recorded source MAC addresses and ingress port IDs of the received link-down protocol message containing no identification field and the received link-down protocol message containing identification field;
if the link-down protocol message containing no identification field and the link-down protocol message containing identification field are received on different ports respectively, the master node in the master ring judging whether the source MAC address of the received link-down protocol message containing no identification field is matched with the MAC address in the first identification field in the local buffer area or the MAC address in the second identification field in the local buffer area; and
if the source MAC address of the received link-down protocol message containing no identification field is matched with the MAC address in the first identification field in the local buffer area or the MAC address in the second identification field in the local buffer area, the master node in the master ring determining that the master ring is connected and the shared link is down; otherwise, the master node in the master ring determining that the master ring is disconnected and the shared link is down.

3. The method according to claim 2, **characterized in that**
after the first boundary node sends the link-down protocol message containing identification field to the slave ring, the method further comprises: after receiving the link-down protocol message containing identification field, the master node in the slave ring recording the first identification field and passes through the link-down protocol message containing identification field to the second boundary node; and
judging, by the master node in the slave ring, whether to open the slave port according to the information comprises: the master node in the slave ring receiving the flush protocol message containing identification field, determining that the master ring is disconnected when judging that the flush protocol message containing identification field carries the number of identification fields, and opening the slave port when determining that an MAC address in one identification field carried in the flush protocol message containing identification field is matched with an MAC address in one identification field locally recorded by the master node in the slave ring.

4. The method according to claim 2, **characterized by** further comprising:
the first boundary node stopping sending the link-down protocol message containing identification field to the slave ring, when detecting that the shared link is recovered; and
the master node in the slave ring blocking the slave port, when not receiving the link-down protocol message containing identification field within a predetermined time and determining that there is no link failure in the slave ring.

5. The method according to claim 1, **characterized in that** the one or more identification fields carried in the flush protocol message containing identification field which is sent by the master node in the master ring are all identification fields in a local buffer area of the master node in the master ring.

6. The method according to claim 1, **characterized in that**
notifying, by the master node in the master ring, the information of the determined connectivity condition of the master ring and the determined state of the shared link to the master node in the slave ring comprises: if the master node in the master ring determines that the state of the shared link still is down and other links in the master ring are all recovered, the master node in the master ring sending a flush protocol message containing identification field to the master node in the slave ring, wherein the flush protocol message containing identification field carries one or more identification fields used for indicating the shared link and a second predetermined value used for indicating connectivity of the master ring; and
judging, by the master node in the slave ring, whether to open the slave port according to the information comprises: the master node in the slave ring receiving a flush protocol message containing identification field; the master node in the slave ring determining that the master ring is connected when judging that the flush protocol message containing identification field carries the second predetermined value, and blocking the slave port when determining that there is no link failure in the slave ring.

7. A multi-ring Ethernet, comprising:
- a master ring;
- a master node (S1) in the master ring;
- a slave ring;
- a master node (S4) in the slave ring;
- a shared link being a link shared between the master ring and the slave ring
**characterized in that**
- the master node (S1) in the master ring being configured to determine the connectivity condition of the master ring, and configured to determine a state of the shared link;
- the master node (S1) in the master ring comprising a sending module (102),
- - wherein the sending module (102) is configured to send a flush protocol message containing an identification field to the master node (S4) in the slave ring when the master node (S1) in the master ring determines that the master ring is disconnected and determines that the state of the shared link is down, wherein the identification field carries one or more identification fields used for indicating the shared link and the number of identification fields;
- - wherein the sending module (102) is configured to send a flush protocol message containing an identification field to the master node (S4) in the slave ring when the master node (S1) in the master ring determines that the master ring is connected and determines that the state of the shared link is down, wherein the identification field carries one or more identification fields used for indicating the shared link and a first predetermined value used for indicating connectivity of the master ring;
- the master node (S4) in the slave ring comprising a receiving module (202) configured to receive the flush protocol message containing an identification field from the master node (S1) in the master ring;
- the master node (S4) in the slave ring comprising a judgment module (204),
- - wherein the judgment module (204) is configured to determine that the master ring is disconnected if the flush protocol message containing an identification field carries the number of identification fields;
- - wherein the judgment module (204) is configured to determine that the master ring is connected if the flush protocol message containing an identification field carries the first predetermined value used for indicating connectivity of the master ring
- the master node (S4) in the slave ring comprising a control module (206),
- - wherein the control module (206) is configured to determine if there is a link failure in the slave ring;
- - wherein the control module (206) is configured to open the slave port of the master node (S4) in the slave ring if the judgment module (204) has determined that the master ring is disconnected;
- - wherein the control module (206) is configured to keep blocking the slave port in the master node (S4) in the slave ring if the judgment module (204) has determined that the master ring is connected and the control module (206) has determined that there is no link failure in the slave ring.

## Patentansprüche

1. Mehrring-Ethernet-Schutzverfahren, **dadurch gekennzeichnet, dass** es umfasst:
Ermitteln, durch einen Master-Knoten in einem Master-Ring, des Konnektivitätszustands des Master-Rings und eines Status von einem geteilten Link (S502);
Benachrichtigen, durch den Master-Knoten im Master-Ring, der Informationen von dem ermittelten Konnektivitätszustand des Master-Rings und dem ermittelten Status des geteilten Links zu einem Master-Knoten in einem Slave-Ring (S504); und
Beurteilen, durch den Master-Knoten im Slave-Ring, ob ein Slave-Port nach den Informationen geöffnet werden soll (S506);
wobei der geteilte Link ein zwischen dem Master-Ring und dem Slave-Ring geteilter Link ist;
wobei
die Schritte zur Benachrichtigung der Informationen von dem ermittelten Konnektivitätszustand des Master-Rings und des Status des geteilten Links zum Master-Knoten im Slave-Ring und Beurteilen, ob der Slave-Port nach den Informationen geöffnet werden soll, Folgendes umfassen: Senden durch den Master-Knoten im Master-Ring einer Flush-Protokollnachricht, die ein Identifikationsfeld enthält, zum Master-Knoten im Slave-Ring, wenn der Master-Knoten im Master-Ring ermittelt, dass der Master-Ring getrennt und der Status des geteilten Links ausgefallen ist, wobei die Flush-Protokollnachricht, die ein Identifikationsfeld enthält, eins oder mehrere Identifikationsfelder trägt, die für die Angabe des geteilten Links und der Anzahl der Identifikationsfelder verwendet werden; und Empfangen durch den Master-Knoten im Master-Ring der Flush-Protokollnachricht, die ein Identifikationsfeld enthält, Ermitteln der Trennung des Master-Rings, wenn es beurteilt wird, dass die Flush-Protokollnachricht, die ein Identifikationsfeld enthält, die Anzahl der Identifikationsfelder trägt, und Öffnen des Slave-Ports;
die Schritte zur Benachrichtigung der Informationen von dem ermittelten Konnektivitätszustand des Master-Rings und des Status des geteilten Links zum Master-Knoten im Slave-Ring und Beurteilen, ob der Slave-Port nach den Informationen geöffnet werden soll, Folgendes umfassen: Senden durch den Master-Knoten im Master-Ring einer Flush-Protokollnachricht, die ein Identifikationsfeld enthält, zum Master-Knoten im Slave-Ring, wenn es ermittelt wird, dass der Master-Ring verbunden und der Status des geteilten Links ausgefallen ist, wobei die Flush-Protokollnachricht, die ein Identifikationsfeld enthält, eins oder mehrere Identifikationsfelder trägt, die für die Angabe des geteilten Links verwendet werden, und einen ersten vorgegebenen Wert, der für die Angabe der Konnektivität des Master-Rings verwendet wird; und Empfangen durch den Master-Knoten im Slave-Ring der Flush-Protokollnachricht, die ein Identifikationsfeld enthält; Ermitteln durch den Master-Knoten im Slave-Ring, dass der Master-Ring nach dem ersten vorgegebenen Wert, der in der Flush-Protokollnachricht getragen wird, die ein Identifikationsfeld enthält, verbunden ist, Halten des Slave-Port im blockierten Zustand, nachdem es ermittelt wird, dass es keine Link-Fehler im Slave-Ring gibt.

2. Verfahren nach Anspruch 1, **dadurch gekennzeichnet, dass** die Ermittlung durch den Master-Knoten im Master-Ring des Konnektivitätszustandes des Master-Rings und des Status des geteilten Links Folgendes umfasst:
nach der Erkennung eines Linkausfalls des geteilten Links, Senden durch einen ersten Randknoten einer Linkausfall-Protokollnachricht, die kein Identifikationsfeld enthält, zum Master-Ring und gleichzeitiges Senden einer Linkausfall-Protokollnachricht, die ein Identifikationsfeld enthält, zum Slave-Ring, wobei die Linkausfall-Protokollnachricht, die ein Identifikationsfeld enthält, eins oder mehrere Identifikationsfelder und die Anzahl der Identifikationsfelder trägt, das getragene Identifikationsfeld ist ein erstes Identifikationsfeld, bestehend aus einer Media Access Control-Adresse, MAC, des ersten Randknotens und einer Kennung, ID, eines Ports, der die Linkausfall-Protokollnachricht, die ein Identifikationsfeld enthält, sendet;
nachdem ein zweiter Randknoten am anderen Ende des ersten Randknotens die Linkausfall-Protokollnachricht, die ein Identifikationsfeld enthält, empfängt, Hinzufügen durch den zweiten Randknoten eines zweiten Identifikationsfeldes in der Linkausfall-Protokollnachricht, die ein Identifikationsfeld enthält, und Senden der Linkausfall-Protokollnachricht, die ein Identifikationsfeld enthält, zum Master-Ring, wobei das zweite Identifikationsfeld eine MAC-Adresse des zweiten Randknotens und eine ID eines Eingangsports der Linkausfall-Protokollnachricht, die ein Identifikationsfeld enthält, umfasst;
nach Empfang der Linkausfall-Protokollnachricht, die ein Identifikationsfeld enthält, Speichern durch den Master-Knoten im Master-Ring des ersten Identifikationsfeldes und des zweiten Identifikationsfeldes auf einem lokalen Pufferbereich;
Beurteilen durch den Master-Knoten im Master-Ring, ob die Linkausfall-Protokollnachricht, die kein Identifikationsfeld enthält, und die Linkausfall-Protokollnachricht, die ein Identifikationsfeld enthält, auf verschiedenen Ports jeweils nach den lokal gespeicherten Quellen-MAC-Adressen und Eingangsport-IDs der empfangenen Linkausfall-Protokollnachricht, die kein Identifikationsfeld enthält, und die empfangene Linkausfall-Protokollnachricht, die ein Identifikationsfeld enthält, empfangen werden;
wenn die Linkausfall-Protokollnachricht, die kein Identifikationsfeld enthält, und die Linkausfall-Protokollnachricht, die ein Identifikationsfeld enthält, auf verschiedenen Ports jeweils empfangen werden, Beurteilen durch den Master-Knoten im Master-Ring, ob die Quellen-MAC-Adresse der empfangenen Linkausfall-Protokollnachricht, die kein Identifikationsfeld enthält, auf die MAC-Adresse im ersten Identifikationsfeld im lokalen Pufferbereich oder die MAC-Adresse im zweiten Identifikationsfeld im lokalen Pufferbereich abgestimmt ist; und
wenn die Quellen-MAC-Adresse der empfangenen Linkausfall-Protokollnachricht, die kein Identifikationsfeld enthält, auf die MAC-Adresse im ersten Identifikationsfeld im lokalen Pufferbereich oder die MAC-Adresse im zweiten Identifikationsfeld im lokalen Pufferbereich abgestimmt ist, Ermitteln durch den Master-Knoten im Master-Ring, dass der Master-Ring verbunden und der geteilte Link ausgefallen ist; andernfalls, Ermitteln durch den Master-Knoten im Master-Ring, dass der Master-Ring getrennt und der geteilte Link ausgefallen ist.

3. Verfahren nach Anspruch 2, **dadurch gekennzeichnet, dass** das Verfahren, nachdem der erste Randknoten die Linkausfall-Protokollnachricht, die ein Identifikationsfeld enthält, zum Slave-Ring sendet, zudem Folgendes umfasst: nach Empfang der Linkausfall-Protokollnachricht, die ein Identifikationsfeld enthält, Speichern durch den Master-Knoten im Slave-Ring des ersten Identifikationsfeldes und Durchlaufen der Linkausfall-Protokollnachricht, die ein Identifikationsfeld enthält, zum zweiten Randknoten; und
wobei das Beurteilen, durch den Master-Knoten im Slave-Ring, ob der Slave-Port nach den Informationen geöffnet werden soll, Folgendes umfasst: Empfangen durch den Master-Knoten im Slave-Ring der Flush-Protokollnachricht, die ein Identifikationsfeld enthält, Ermitteln, dass der Master-Ring getrennt ist, wenn es beurteilt wird, dass die Flush-Protokollnachricht, die ein Identifikationsfeld enthält, die Anzahl der Identifikationsfelder trägt und Öffnen des Slave-Ports, wenn es ermittelt wird, dass eine MAC-Adresse in einem Identifikationsfeld, das in der Flush-Protokollnachricht, die ein Identifikationsfeld enthält, getragen wird, auf eine MAC-Adresse in einem lokal durch den Master-Knoten im Slave-Ring gespeicherten Identifikationsfeld abgestimmt ist.

4. Verfahren nach Anspruch 2, **dadurch gekennzeichnet, dass** es zudem umfasst:
Stoppen durch den ersten Randknoten der Sendung der Linkausfall-Protokollnachricht, die ein Identifikationsfeld enthält, zum Slave-Ring, wenn es ermittelt wird, dass der geteilte Link wiederhergestellt wird; und
Blockieren durch den Master-Knoten im Slave-Ring des Slave-Ports, wenn er die Linkausfall-Protokollnachricht, die ein Identifikationsfeld enthält, innerhalb einer vorgegebenen Zeit nicht empfängt und Ermitteln, dass es keinen Link-Fehler im Slave-Ring gibt.

5. Verfahren nach Anspruch 1, **dadurch gekennzeichnet, dass** eins oder mehrere Identifikationsfelder, die in der Flush-Protokollnachricht getragen werden, die ein Identifikationsfeld enthält, die durch den Master-Knoten im Master-Ring gesendet wird, alle Identifikationsfelder in einem lokalen Pufferbereich des Master-Knotens im Master-Ring sind.

6. Verfahren nach Anspruch 1, **dadurch gekennzeichnet, dass**
das Benachrichtigen, durch den Master-Knoten im Master-Ring, der Informationen von dem ermittelten Konnektivitätszustand des Master-Rings und dem ermittelten Status des geteilten Links zum Master-Knoten im Slave-Ring Folgendes umfasst: wenn der Master-Knoten im Master-Ring ermittelt, dass der Status des geteilten Links noch ausfällt und andere Links im Master-Ring alle wiederhergestellt sind, Senden durch den Master-Knoten im Master-Ring einer Flush-Protokollnachricht, die ein Identifikationsfeld enthält, zum Master-Knoten im Slave-Ring, wobei die Flush-Protokollnachricht, die ein Identifikationsfeld enthält, eins oder mehrere Identifikationsfelder trägt, die für die Angabe des geteilten Links verwendet werden, und einen zweiten vorgegebenen Wert, der für die Angabe der Konnektivität des Master-Rings verwendet wird; und
Beurteilen, durch den Master-Knoten im Slave-Ring, ob der Slave-Port nach den Informationen geöffnet werden soll, Folgendes umfasst: Empfangen durch den Master-Knoten im Slave-Ring einer Flush-Protokollnachricht, die ein Identifikationsfeld enthält; Ermitteln durch den Master-Knoten im Slave-Ring, dass der Master-Ring verbunden ist, wenn es beurteilt wird, dass die Flush-Protokollnachricht, die ein Identifikationsfeld enthält, den zweiten vorgegebenen Wert trägt, und Blockieren des Slave-Ports, wenn es ermittelt wird, dass es keinen Link-Fehler im Slave-Ring gibt.

7. Mehrring-Ethernet, umfassend:
- einen Master-Ring;
- einen Master-Knoten (S1) im Master-Ring;
- einen Slave-Ring;
- einen Master-Knoten (S4) im Slave-Ring;
- wobei ein geteilter Link ein zwischen dem Master-Ring und dem Slave-Ring geteilter Link ist;
**dadurch gekennzeichnet, dass**
- wobei der Master-Knoten (S1) im Master-Ring konfiguriert ist, um den Konnektivitätszustand des Master-Rings zu ermitteln, und konfiguriert, um ein Status des geteilten Links zu ermitteln;
- wobei der Master-Knoten (S1) im Master-Ring ein Sendemodul (102) umfasst,
-- wobei das Sendemodul (102) konfiguriert ist, um eine Flush-Protokollnachricht, die ein Identifikationsfeld enthält, zum Master-Knoten (S4) im Slave-Ring zu senden, wenn der Master-Knoten (S1) im Master-Ring ermittelt, dass der Master-Ring getrennt ist, und ermittelt, dass der Status des geteilten Links ausgefallen ist, wobei das Identifikationsfeld eins oder mehrere Identifikationsfelder trägt, die für die Angabe des geteilten Links und der Anzahl der Identifikationsfelder verwendet werden;
-- wobei das Sendemodul (102) konfiguriert ist, um eine Flush-Protokollnachricht, die ein Identifikationsfeld enthält, zum Master-Knoten (S4) im Slave-Ring zu senden, wenn der Master-Knoten (S1) im Master-Ring ermittelt, dass der Master-Ring verbunden ist und ermittelt, dass der Status des geteilten Links ausgefallen ist, wobei das Identifikationsfeld eins oder mehrere Identifikationsfelder trägt, die für die Angabe des geteilten Links verwendet werden, und einen ersten vorgegebenen Wert, der für die Angabe der Konnektivität des Master-Rings verwendet wird;
- wobei der Master-Knoten (S4) im Slave-Ring ein Empfangsmodul (202) umfasst, das konfiguriert ist, um die Flush-Protokollnachricht, die ein Identifikationsfeld enthält, vom Master-Knoten (S1) im Master-Ring zu empfangen;
- wobei der Master-Knoten (S4) im Slave-Ring ein Beurteilungsmodul (204) umfasst,
-- wobei das Beurteilungsmodul (204) konfiguriert ist, um zu ermitteln, dass der Master-Ring getrennt ist, wenn die Flush-Protokollnachricht, die ein Identifikationsfeld enthält, die Anzahl der Identifikationsfelder trägt;
-- wobei das Beurteilungsmodul (204) konfiguriert ist, um zu ermitteln, dass der Master-Ring verbunden ist, wenn die Flush-Protokollnachricht, die ein Identifikationsfeld enthält, den ersten vorgegebenen Wert trägt, der für die Angabe der Konnektivität des Master-Rings verwendet wird;
- wobei der Master-Knoten (S4) im Slave-Ring ein Steuermodul (206) umfasst,
-- wobei das Steuermodul (206) konfiguriert ist, um zu ermitteln, ob es einen Link-Fehler im Slave-Ring gibt;
-- wobei das Steuermodul (206) konfiguriert ist, um den Slave-Port des Master-Knotens (S4) im Slave-Ring zu öffnen, wenn das Beurteilungsmodul (204) ermittelt hat, dass der Master-Ring getrennt ist;
-- wobei das Steuermodul (206) konfiguriert ist, um den Slave-Port im Master-Knoten (S4) im Slave-Ring blockiert zu halten, wenn das Beurteilungsmodul (204) ermittelt hat, dass der Master-Ring verbunden ist und das Steuermodul (206) ermittelt hat, dass es keinen Link-Fehler im Slave-Ring gibt.

## Revendications

1. Procédé de protection d'un réseau Ethernet à anneaux multiples, **caractérisé en ce qu'**il comprend :
déterminer, par un noeud maître dans un anneau maître, une condition de connectivité de l'anneau maître et un état d'une liaison partagée (S502) ;
notifier, par le noeud maître dans l'anneau maître, des informations de la condition de connectivité déterminée de l'anneau maître et l'état déterminé de la liaison partagée à un noeud maître dans un anneau asservi (S504) ; et
évaluer, par le noeud maître dans l'anneau asservi, s'il faut ouvrir un port asservi selon les informations (S506) ;
dans lequel la liaison partagée est une liaison partagée entre l'anneau maître et l'anneau asservi ;
dans lequel
les étapes consistant à notifier les informations de la condition de connectivité de l'anneau maître et de l'état de la liaison partagée au noeud maître dans l'anneau asservi, et celles consistant à évaluer s'il faut ouvrir le port asservi selon les informations comprennent : envoyer, par le noeud maître dans l'anneau maître, un message de protocole flush contenant le champ d'identification au noeud maître dans l'anneau asservi, si le noeud maître dans l'anneau maître détermine que l'anneau maître est déconnecté et que l'état de la liaison partagée est interrompu, dans lequel le message de protocole flush contenant le champ d'identification comporte un ou plusieurs champs d'identification utilisés pour indiquer la liaison partagée et le nombre de champs d'identification ; et recevoir, par le noeud maître dans l'anneau asservi, le message de protocole flush contenant le champ d'identification, déterminer que l'anneau maître est déconnecté lorsqu'il évalue que le message de protocole flush contenant le champ d'identification comporte le nombre de champs d'identification, et ouvrir le port asservi ;
ou les étapes consistant à notifier les informations de la condition de connectivité déterminée de l'anneau maître et de l'état déterminé de la liaison partagée au noeud maître dans l'anneau asservi, et celles consistant à évaluer s'il faut ouvrir le port asservi selon les informations comprennent : envoyer, par le noeud maître dans l'anneau maître, un message de protocole flush contenant le champ d'identification au noeud maître dans l'anneau asservi, lorsqu'il détermine que l'anneau maître est connecté et que l'état de la liaison partagée est interrompue, dans lequel le message de protocole flush contenant le champ d'identification comporte un ou plusieurs champs d'identification utilisés pour indiquer la liaison partagée et une première valeur prédéterminée utilisée pour indiquer la connectivité de l'anneau maître ; et recevoir, par le noeud maître dans l'anneau asservi, le message de protocole flush contenant le champ d'identification ; déterminer, par le noeud maître dans l'anneau asservi, que l'anneau maître est connecté selon la première valeur prédéterminée acheminée dans le message de protocole flush contenant le champ d'identification, et maintenir bloqué le port asservi après avoir déterminé qu'il n'y a pas de panne de liaison dans l'anneau asservi.

2. Procédé selon la revendication 1, **caractérisé en ce que** la détermination, par le noeud maître dans l'anneau maître, de la condition de connectivité de l'anneau maître et de l'état de la liaison partagée comprend que :
après détection d'une interruption de liaison de la liaison partagée, un premier noeud frontière envoie un message de protocole d'interruption de liaison ne contenant pas de champ d'identification à l'anneau maître et envoie simultanément un message de protocole d'interruption de liaison contenant le champ d'identification à l'anneau asservi, dans lequel le message de protocole d'interruption de liaison contenant le champ d'identification comporte un ou plusieurs champs d'identification et le nombre de champs d'identification, le champ d'identification acheminé est un premier champ d'identification consistant en une adresse MAC, Media Access Control, du premier noeud frontière et un identificateur, ID, d'un port envoyant le message de protocole d'interruption de liaison contenant le champ d'identification ;
après qu'un second noeud frontière situé à l'autre extrémité du premier noeud frontière ait reçu le message de protocole d'interruption de liaison contenant le champ d'identification, le second noeud frontière ajoute un second champ d'identification dans le message de protocole d'interruption de liaison contenant le champ d'identification et envoie le message de protocole d'interruption de liaison contenant le champ d'identification à l'anneau maître, dans lequel le second champ d'identification comprend une adresse MAC du second noeud frontière et un ID d'un port d'entrée du message de protocole d'interruption de liaison contenant le champ d'identification ;
après avoir reçu le message de protocole d'interruption de liaison contenant le champ d'identification, le noeud maître dans l'anneau maître sauvegarde le premier champ d'identification et le second champ d'identification dans une zone tampon locale ;
le noeud maître dans l'anneau maître évalue si le message de protocole d'interruption de liaison ne contenant pas de champ d'identification et le message de protocole d'interruption de liaison contenant le champ d'identification sont reçus sur différents ports respectivement, selon les adresses MAC sources enregistrées localement et les ID de port d'entrée du message de protocole d'interruption de liaison reçu ne contenant pas de champ d'identification et le message de protocole d'interruption de liaison reçu contenant le champ d'identification ;
si le message de protocole d'interruption de liaison ne contenant pas de champ d'identification et le message de protocole d'interruption de liaison contenant le champ d'identification sont reçus sur différents ports respectivement, le noeud maître dans l'anneau maître évalue si l'adresse MAC source du message de protocole d'interruption de liaison reçu ne contenant pas de champ d'identification correspond à l'adresse MAC dans le premier champ d'identification dans la zone tampon locale ou à l'adresse MAC dans le second champ d'identification dans la zone tampon locale ; et
si l'adresse MAC source du message de protocole d'interruption de liaison reçu ne contenant pas de champ d'identification correspond à l'adresse MAC dans le premier champ d'identification dans la zone tampon locale ou à l'adresse MAC dans le second champ d'identification dans la zone tampon locale, le noeud maître dans l'anneau maître détermine que l'anneau maître est connecté et que la liaison partagée est interrompue ; sinon, le noeud maître dans l'anneau maître détermine que l'anneau maître est déconnecté et que la liaison partagée est interrompue.

3. Procédé selon la revendication 2, **caractérisé en ce qu'**après l'envoi par le premier noeud frontière à l'anneau asservi du message de protocole d'interruption de liaison contenant le champ d'identification, le procédé comprend de plus que: après réception du message de protocole d'interruption de liaison contenant le champ d'identification, le noeud maître dans l'anneau asservi enregistre le premier champ d'identification et transfère le message de protocole d'interruption de liaison contenant le champ d'identification au second noeud frontière ; et
l'évaluation, par le noeud maître dans l'anneau asservi, s'il faut ouvrir le port asservi selon les informations comprend que : le noeud maître dans l'anneau asservi reçoit le message de protocole flush contenant le champ d'identification, détermine que l'anneau maître est déconnecté lorsqu'il évalue que le message de protocole flush contenant le champ d'identification comporte le nombre de champs d'identification, et ouvre le port asservi lorsqu'il détermine qu'une adresse MAC dans un champ d'identification acheminé dans le message de protocole flush contenant le champ d'identification correspond à une adresse MAC dans un champ d'identification enregistré localement par le noeud maître dans l'anneau asservi.

4. Procédé selon la revendication 2, **caractérisé en ce qu'**il comprend de plus que :
le premier noeud frontière arrête d'envoyer le message de protocole d'interruption de liaison contenant le champ d'identification à l'anneau asservi lorsqu'il détecte que la liaison partagée a été récupérée ; et
le noeud maître dans l'anneau asservi bloque le port asservi lorsqu'il ne reçoit pas le message de protocole d'interruption de liaison contenant le champ d'identification après une période de temps prédéterminée et détermine qu'il n'y a pas de panne de liaison dans l'anneau asservi.

5. Procédé selon la revendication 1, **caractérisé en ce qu'**un ou plusieurs champs d'identification acheminés dans le message de protocole flush contenant le champ d'identification qui est envoyé par le noeud maître dans l'anneau maître sont tous des champs d'identification dans une zone tampon locale du noeud maître dans l'anneau maître.

6. Procédé selon la revendication 1, **caractérisé en ce que**
la notification, par le noeud maître dans l'anneau maître, des informations de la condition de connectivité déterminée de l'anneau maître et de l'état déterminé de la liaison partagée au noeud maître dans l'anneau asservi comprend que : si le noeud maître dans l'anneau maître détermine que l'état de la liaison partagée est toujours interrompu et que d'autres liaisons dans l'anneau maître sont toutes récupérées, le noeud maître dans l'anneau maître envoie un message de protocole flush contenant le champ d'identification au noeud maître dans l'anneau asservi, dans lequel le message de protocole flush contenant le champ d'identification comporte un ou plusieurs champs d'identification utilisés pour indiquer la liaison partagée et une seconde valeur prédéterminée utilisée pour indiquer la connectivité de l'anneau maître ; et
l'évaluation, par le noeud maître dans l'anneau asservi, s'il faut ouvrir le port asservi selon les informations comprend que : le noeud maître dans l'anneau asservi reçoit un message de protocole flush contenant le champ d'identification ; le noeud maître dans l'anneau asservi détermine que l'anneau maître est connecté lorsqu'il évalue que le message de protocole flush contenant le champ d'identification comporte la seconde valeur prédéterminée, et bloque le port asservi lorsqu'il détermine qu'il n'y pas de panne de liaison dans l'anneau asservi.

7. Réseau Ethernet à anneaux multiples, comprenant :
- un anneau maître ;
- un noeud maître (S1) dans l'anneau maître ;
- un anneau asservi ;
- un noeud maître (S4) dans l'anneau asservi ;
- une liaison partagée étant une liaison partagée entre l'anneau maître et l'anneau asservi ;
**caractérisé en ce que**
- le noeud maître (S1) dans l'anneau maître étant configuré pour déterminer la condition de connectivité de l'anneau maître, et configuré pour déterminer un état de la liaison partagée ;
- le noeud maître (S1) dans l'anneau maître comprenant un module d'envoi (102),
-- dans lequel le module d'envoi (102) est configuré pour envoyer un message de protocole flush contenant un champ d'identification au noeud maître (S4) dans l'anneau asservi lorsque le noeud maître (S1) dans l'anneau maître détermine que l'anneau maître est déconnecté et détermine que l'état de la liaison partagée est interrompu, dans lequel le champ d'identification comporte un ou plusieurs champs d'identification utilisés pour indiquer la liaison partagée et le nombre de champs d'identification ;
-- dans lequel le module d'envoi (102) est configuré pour envoyer un message de protocole flush contenant un champ d'identification au noeud maître (S4) dans l'anneau asservi lorsque le noeud maître (S1) dans l'anneau maître détermine que l'anneau maître est connecté et détermine que l'état de la liaison partagée est interrompu, dans lequel le champ d'identification comporte un ou plusieurs champs d'identification utilisés pour indiquer la liaison partagée et une première valeur prédéterminée utilisée pour indiquer la connectivité de l'anneau maître ;
- le noeud maître (S4) dans l'anneau asservi comprenant un module de réception (202) configuré pour recevoir le message de protocole flush, contenant un champ d'identification, du noeud maître (S1) dans l'anneau maître ;
- le noeud maître (S4) dans l'anneau asservi comprenant un module d'évaluation (204),
-- dans lequel le module d'évaluation (204) est configuré pour déterminer que l'anneau maître est déconnecté si le message de protocole flush contenant un champ d'identification comporte le nombre de champs d'identification ;
-- dans lequel le module d'évaluation (204) est configuré pour déterminer que l'anneau maître est connecté si le message de protocole flush contenant un champ d'identification comporte la première valeur prédéterminée utilisée pour indiquer la connectivité de l'anneau maître ;
- le noeud maître (S4) dans l'anneau asservi comprenant un module de contrôle (206),
-- dans lequel le module de contrôle (206) est configuré pour déterminer s'il y a une panne de liaison dans l'anneau asservi ;
-- dans lequel le module de contrôle (206) est configuré pour ouvrir le port asservi du noeud maître (S4) dans l'anneau asservi si le module d'évaluation (204) a déterminé que l'anneau maître est déconnecté ;
-- dans lequel le module de contrôle (206) est configuré pour maintenir bloqué le port asservi dans le noeud maître (S4) dans l'anneau asservi si le module d'évaluation (204) a déterminé que l'anneau maître est connecté et si le module de contrôle (206) a déterminé qu'il n'y a pas de panne de liaison dans l'anneau asservi.
